# EUROPÄISCHE PATENTSCHRIFT

(11) **EP 2 150 397 B1**
(45) Veröffentlichungstag und Bekanntmachung des Hinweises auf die Patenterteilung: **24.10.2012**
(21) Anmeldenummer: 08758130.2
(22) Anmeldetag: 29.05.2008
(51) Int. Cl.: B29C 70/54, B29C 70/86, B29C 70/48, B29C 70/30, B29B 11/16

(54) **VERFAHREN ZUR HERSTELLUNG VON BAUELEMENTEN AUS FASERVERSTÄRKTEN KUNSTSTOFFEN**
METHOD FOR PRODUCING CONSTRUCTION ELEMENTS OF FIBRE-REINFORCED PLASTIC MATERIALS
PROCÉDÉ DE RÉALISATION D'ÉLÉMENTS STRUCTURELS EN MATIÈRES PLASTIQUES RENFORCÉES PAR FIBRES

(30) Priorität: 31.05.2007 DE 102007025556
(43) Veröffentlichungstag der Anmeldung: 10.02.2010
(73) Patentinhaber: Eurocopter Deutschland GmbH, 86609 Donauwörth (DE)
(72) Erfinder: WEIMER, Christian, 81543 München (DE)
(74) Vertreter: Pouillot, Laurent Pierre Paul
(86) Internationale Anmeldenummer: PCT/DE2008/000890
(87) Internationale Veröffentlichungsnummer: WO 2008/145105

(56) Entgegenhaltungen:
- EP-A- 1 342 544
- DE-A1- 10 250 826
- DE-A1- 10 324 141
- DE-A1-102006 031 491
- DE-U1- 20 320 626
- US-A- 3 695 968
- US-A- 5 344 687
- US-A- 5 439 353

## Beschreibung

Die Erfindung betrifft ein Verfahren zur Herstellung von Bauelementen aus faserverstärkten Kunststoffen, wie sie beispielsweise für die Steuerelemente von Rotorblättern bzw. das Rotorblatt selbst - eines Hubschraubers zur Anwendung gelangen.

Es ist bekannt, die Gewebelagen bildenden Fasern mit und ohne Binder versehen auf einen der Konfiguration des zu erzeugenden Bauelementes entsprechenden Kern aufzuwickeln oder aufzuflechten und in einer den Kern umfassenden Injektionsform mittels Harzinjektionen zu verfestigen und sie darin auszuhärten. Die Gewebe- bzw. Flechtlagen werden durch Reibung bzw. Vorspannung auf dem Kern gehalten bis dieser in die Injektionsform überführt ist. Das ist nur bedingt möglich, da hinsichtlich möglicher Faserorientierung unterschieden werden muss.

Wie die Erfahrung gezeigt hat, bereitet es Schwierigkeiten ein Fasergelege zur Erzeugung eines solchen als Preformling bezeichneten Bauelementes auf einem Kern gleichzeitig zu Drapieren und zu fixieren, insbesondere wenn dieses einen mehrlagigen Aufbau sowie zusätzliche aus unidirekt ausgerichteten Singular-Fasern bestehende UD-Lagen aufweist. In aller Regel leiden beim Aufwickeln und Aufflechten der Aufbau des Fasergeleges und die Ausrichtung der einzelnen Fasern erheblich, so dass der fertige Preformling nach dem Entformen aus der Injektionsform ohne die geforderten Festigkeitseigenschaften ist. Ein Drapieren, also das Überführen des Fasergeleges in eine dreidimensionale Form ist bei einem solchen Verfahren beinahe unmöglich. Dies ist insbesondere bei der Herstellung von rotationssymmetrischen komplexen Bauteilen aus faserverstärkten Kunststoffen -wie z. B. bei der Herstellung von Steuerhömem für die Rotorblätter eines Hubschraubers-.der Fall. Diese wurden bisher aus zwei separaten Schalen hergestellt, die für den Aushärtungsprozess zu einem Bauteil zusammengefügt werden. Ein solches Fertigungsverfahren bedingt, dass Faserlagen zur Aufnahme von an den fertigen Bauteil angreifenden Torsionskräften bei deren Herstellung geteilt werden müssen, was für die spätere Kraftaufnahme ebenfalls nachteilig ist.

Das Dokument US-A-3,695,968 offenbart ein Verfahren gemäβ dem Oberbegriff des Anspruchs 1 zur Herstellung von Bauelementen aus faserverstärkten Kunststoffen, bei dem Gewebelagen eben auf- und umeinander gelegt werden und durch Harzinjektion zu einem Bauteil verfestigt werden, wobei die Gewebelagen übereinander auf ein Band aufgebracht, in ihrer Lage fixiert, zurecht geschnitten und mit Harz beaufschlagt werden.

Das Dokument EP 1 342 544 A1 offenbart ein Verfahren zur Herstellung von Bauelementen aus faserverstärkten Kunststoffen, bei dem Gewebelagen eben auf- und umeinander gelegt werden und durch Harzinjektion zu einem Bauteil verfestigt werden.

Das Dokument DE 102006031491 A1 offenbart ein Verfahren zur Herstellung eines dreidimensional gekrümmten Faserverbundwerkstoff-Strukturbauteils, das einen vorbestimmten Biegeträgerprofilquerschnitt mit mindestens einem Stegbereich und mindestens einem sich daran anschließenden Gurtbereich mit 0°-Fasem aufweist.

Das Dokument US-A-5,344,687 offenbart strukturell verstärkte thermoplastische Verbund-Materialien, die aus einem strukturell verstärkten, mehrschichtigen Verbund formbar sind. Eine Sperrgewebe-Schicht und/oder eine dekorative Schicht können vorgesehen sein, um dekorative und/oder sonstige Effekte herzustellen oder zu variieren.

Das Dokument DE 20320626 U1 offenbart einen Blattanschluss für Rotorblätter einer Windenergieanlage, bei der die Rotorblätter bzw. die Nabe mit wenigstens einem Insert aus einem festen Material versehen sind, das in die Wurzel des bzw. der aus einem Faserverbundwerkstoff gefertigten, aus mehreren aufeinander gelegten Laminatschichten gefertigten Rotorblatts bzw. der Nabe eingesetzt ist und das mit der Nabe bzw. dem Rotorblatt der Windenergieantage über Bolzen verbunden ist.

Hier setzt nun die Erfindung ein, deren Aufgabe es ist, ein neues Verfahren zur Herstellung einer Faserverstärkungsstruktur zu schaffen, welches ohne die vorstehend beschriebenen Nachteile ist.

Diese Aufgabe ist gemäß der Erfindung durch die Merkmale des Patentanspruches 1 gelöst. Weitere Merkmale der Erfindung ergeben sich aus den Unteransprüchen.

Das erfindungsgemäße Verfahren ermöglicht, dass erstmals das für die Herstellung der Preformlinge erforderliche Fasergelege als exakt vorbereitetes textiles Halbzeug zur Verfügung steht, das durch die exakt vorgestimmten Nähte seine vorgegebene Faserstruktur beibehält und daher auch im drapierten Zustand auf den Kern eines Injektionswerkzeuges - oder eines Hilfsmittels - aufwickelbar ist ohne dabei die vorbereitete geschlossene Faserarchitektur zu verlieren. Damit können auch komplexe rotationssymmetrische Bauteile mit voller Ausnutzung der Fasereigenschaften des Fasergeleges und mit genauer Einstellung der zur Anwendung gelangenden Lagendicken hergestellt werden. Ferner können bei der Aufwicklung des textilen Halbzeuges auf den Kern der Injektionsform weitere erforderliche Bauteile, die für das Endprodukt notwendig sind, einfacher als bisher in den Preformling integriert werden. Die ausgehärteten fertigen Bauteile weisen bei ihrem Einsatz eine homogene Lastverteilung auf.

Das Herstellungsverfahren kann durch die Verwendung von Nähanlagen auch automatisiert werden, ohne das dabei die vorbestimmte Faserarchitektur des textilen Halbzeuges verändert wird. Durch Beigabe von Schmelzfäden wird das textile Halbzeug auf dem jeweiligen Kern des Injektionswerkzeuges auf einfache Weise fixiert. Hierzu genügt ein partielles Erwärmen der Schmelzfäden, z. B. mittels eines Fixierungsrollers ohne dass dabei das gesamte textile Halbzeug erwärmt werden müsste.

Die Erfindung ist nachfolgend anhand von in der Zeichnung mehr oder minder schematisch dargestellter Fertigungshilfen für die Durchführung des erfindungsgemäßen Verfahrens beschrieben.

Es zeigen:
- Fig. 1: einen Ausschnitt eines durch Legen und Konfektionieren von Fasern erstelltes textiles Halbzeuges in Form eines Bandes für die Erzeugung eines Preformlings gemäß der Erfindung;
- Fig 2: die Seitenansicht eines Innenkernes als Teil eines Preformwickelwerkzeuges mit dem als ein vorab konfektioniertes Band ausgebildeten Fasergeleges gemäß Fig. 1 in zweidimensionalem Zustand;
- Fig. 3: die Seitenansicht des Innenkernes gemäß Fig. 2 mit dem vorab konfektionierten Band gemäß Fig. 1 im verformten dreidimensionalen Zustand;
- Fig. 4: der Innenkern nach Fig. 3 mit fixiertem Band und
- Fig. 5: der Innenkern nach Fig. 4 im teilbar ausgebildeten Injektionswerkzeug.

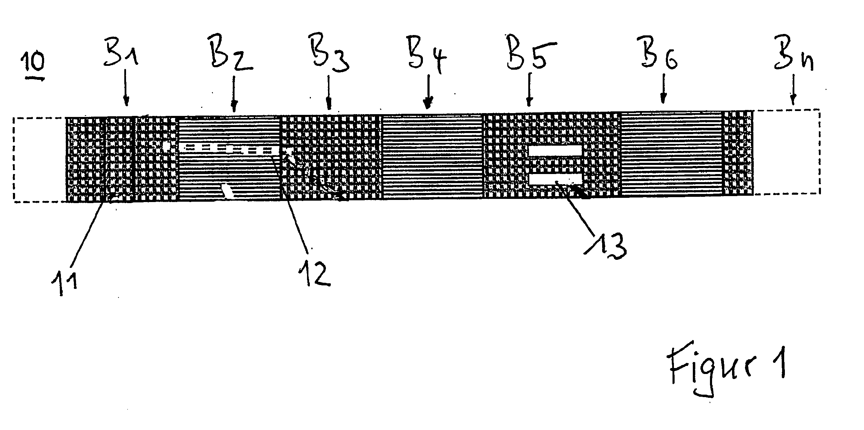

Ein in Fig. 1 ausschnittsweise gezeigtes Band 10 bestehend aus einem üblichen durch Lege- und Konfektionierungsvorgänge hergestellten Fasergelege weist abschnittsweise angeordnete Bereiche B1 bis Bn auf, die in ihrer Ausbildung etwa einander entsprechen aber teilweise unterschiedlich gestaltet sind. So weist der eine hohe Drapierfähigkeit aufweisende Bereich B1 Schmelzfäden 11 zur Fixierung des Bandes mittels Anpress- und Fixierrollen auf dem Kern eines Injektionswerkzeuges auf. Der Bereich B2 ist mit unidirektional ausgerichteten Fasern (UD - Fasern) 12 versehen, die in der neutralen Fase bzw. in der Drapierungsfase angeordnet sind. Der Bereich B4 entspricht den Bereich B2 ist aber ohne UD- Faseranteile 12. Der Bereich B5 weist Schlitze 13 zur Einbindung von der Krafteinleitung dienenden Bauteilen in den Preformling auf.
Der Bereich B6 entspricht wieder dem Bereich B4, usf.

Das auf diese Weise erzeugte Fasergelege, deren Fasern und deren Drapierung exakt den vorgegebenen Eigenschaften des den zu erzeugenden Preformlings entsprechen, wird durch mittels einer Doppelsteppstich-Nähnanlage erzeugt Nähte in deren einmal eingenommenen Lage dauerhaft fixiert, so dass ein leicht zu handhabendes textiles Halbzeug entsteht.

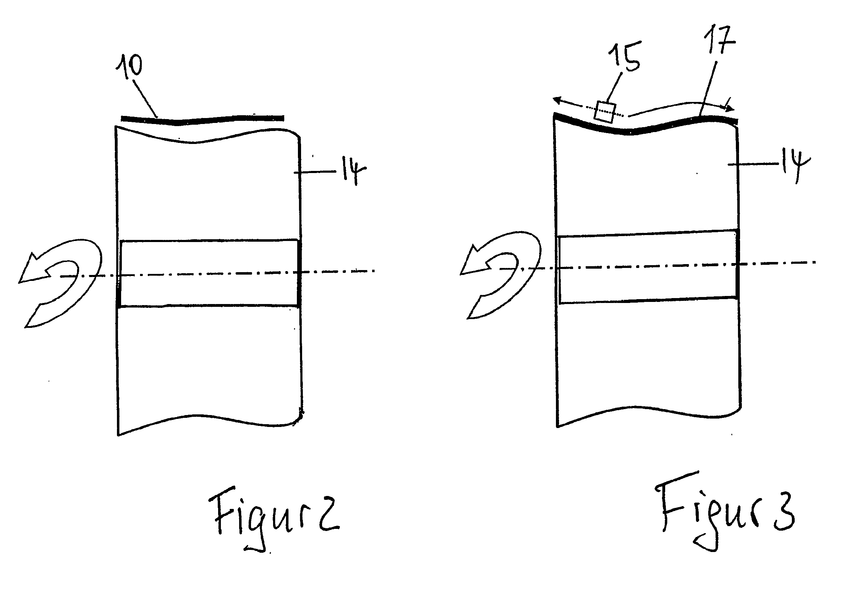

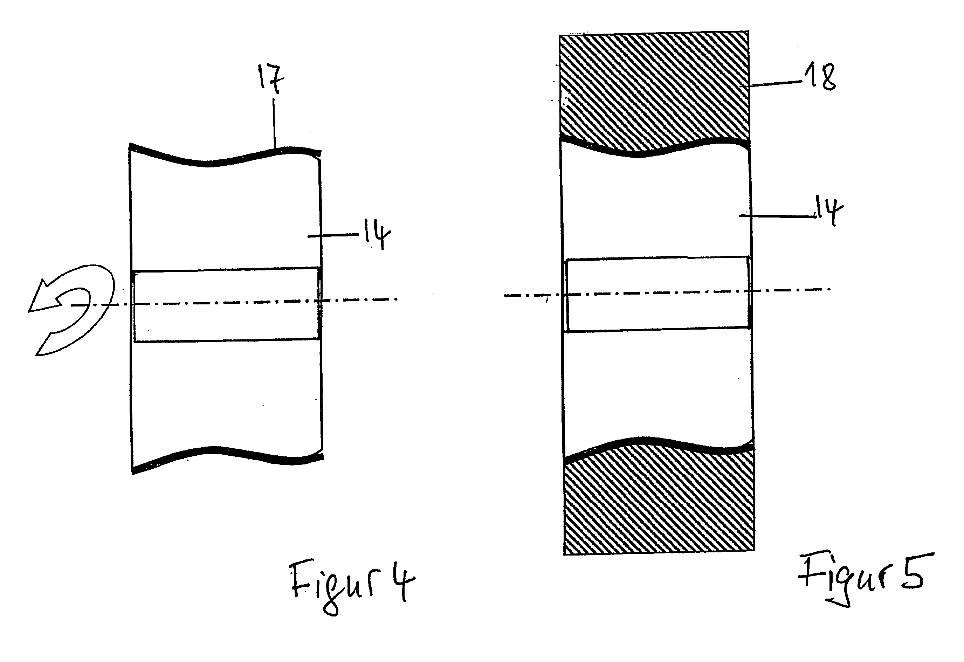

Das ein textiles Halbzeug darstellende Band kann endlos erzeugt, zwischengelagert oder aber sofort von der Nähanlage kommend weiter verarbeitet werden. Dies erfolgt gemäß den Figuren 2 bis 5 in der Weise, das dass Band 10 endkonturiertalso auf geforderte Länge geschnitten- auf den Innenkern 14 als zweidimensionale Lage gewickelt und gemäß Fig. 3 durch bewegliche Anpress- und Fixierrollen 15 des nicht dargestellten Wickelkopfes in einen der Kontur des Innenkernes 14 entsprechende dreidimensionalen Preformling 17 überführt, der der Kontur des zu erstellenden Bauteiles entspricht. Mittels der am Band 10 befindlichen Schmelzfäden 11 erfolgt dessen Fixierung auf dem Kern 14. Der mit dem fixierten Band versehene Kern 14 wird anschließend- wie Fig. 5 zeigt- in das teilbare Injektionswerkzeug 18 eingebracht, in der der Preformling 17 durch Harzinjektion mit anschließender Aushärtung in seine endgültige Form überführt wird.

Sind Krafteinleitungselemente in dem Preformling einzufügen so sind für deren Anordnung Schlitze 13 nach der vorzunehmenden Entkonturierung des Bandes 10 in dieses in der vorbestimmten Ausrichtung einzufügen; vgl. Figur 1.

### Bezugszeichenliste

- 10: Band
- 11: Schmelzfäden
- 12: UD-Faseranteile
- 13: Schlitze
- 14: Innenkern, Kern
- 15: Fixierrolle
- 16:
- 17: Preformling
- 18: Injektionswerkzeug

## Patentansprüche

1. Verfahren zur Herstellung von Bauelementen aus faserverstärkten Kunststoffen, wie Steuerelemente für die Rotorblätter sowie Rotorblätter eines Hubschraubers, bei dem die Fasern als Gewebelagen auf einem Kern aufgelegt und durch Harzinjektion zu einem Bauteil verfestigt werden, mit folgenden Verfahrensschritten:
- die Fasern werden durch Legen/Konfektionieren/Drapieren in ein den Konturen des jeweils zu erzeugenden Bauelementes entsprechendes Fasergelege in Form eines Bandes (10) überführt,
- benötigte unidirekt ausgerichtete Faseranteile (12) werden in Umfangsrichtung des jeweils zu erzeugenden Bauelementes exakt positioniert auf das Band (10) aufgebracht,
- die Fasern des derart geschaffenen Fasergeleges werden mittels vordefinierter Nähte in ihrer Lage fixiert und damit in ein lagerbares textiles Halbzeug überführt, und
- das Band (10) wird entsprechend den Abmaßen des herzustellenden Bauelements endkonturiert,
**dadurch gekennzeichnet, dass**
dem Band (10) Schmelzfäden (11) zugefügt werden und anschließend das Band (10) auf einen Kern (14) eines Injektionswerkzeuges (18) aufgewickelt und mittels der Schmelzfäden (11) auf diesen fixiert wird und durch Harzinjektion in den endgültigen Preformling (17) verfestigt wird.

2. Verfahren nach Anspruch 1, **dadurch gekennzeichnet, dass** die Schmelzfäden (11) im Bereich der hohen Drapierfähigkeit des die Form eines Bandes aufweisenden Fasergelege beigefügt werden.

3. Verfahren nach Anspruch 1, **dadurch gekennzeichnet, dass** benötigte unidirekt ausgerichtete Faseranteile (12) in der neutralen Fase des die Form eines Bandes aufweisenden Fasergeleges aufgebracht und fixiert werden.

4. Verfahren nach Anspruch 3, **dadurch gekennzeichnet, dass** die benötigten unidirekt ausgerichteten Faseranteile (12) außerhalb der Bereiche hohe Drapierfähigkeit des die Form eines Bandes aufweisenden Fasergeleges aufgebracht werden.

5. Verfahren nach Anspruch 1, **dadurch gekennzeichnet, dass** das die Form eines Bandes aufweisende Fasergelege nach dessen Entkonturierung mit Schiitzen (13) zur Einbindung von Krafteinleitungselemente in den Preformling versehen wird.

6. Verfahren nach den Anspruch 1, **dadurch gekennzeichnet, dass** bei maschineller Fixierung die Schmelzfäden (11) des die Form eines Bandes aufweisenden Fasergeleges des Bandes mittels einer Fixierrolle (15) erwärmt werden.

7. Verfahren nach den Ansprüchen 1 bis 6, **dadurch gekennzeichnet dass** für das Herstellen der die Gewebearchitektur des Bandes (10) fixierenden Nähte eine Doppelsteppstiche erzeugende Nähanlage verwendet wird.

## Claims

1. Method for producing components of fibre-reinforced plastics, such as control elements for the rotor blades as well as rotor blades of a helicopter, in which the fibres are laid as fabric layers on a core and are solidified into a component by means of resin injection, having the following method steps:
- the fibres are converted, by means of laying/assembling/draping, into a fibre nonwoven fabric in the shape of a band (10) corresponding to the contours of the respective component to be generated,
- required unidirectly [sic] oriented fibre portions (12) are applied, precisely positioned, on the band (10) in the circumferential direction of the respective component to be generated,
- the fibres of the fibre nonwoven fabric created in such a manner are fixed in their location by means of predefined seams and are thereby converted into a textile semifinished product that can be stored, and
- the band (10) undergoes final contouring corresponding to the dimensions of the component to be produced,
**characterised in that**
fusible threads (11) are added to the band (10), and subsequently the band (10) is wound on a core (14) of an injection tool (18) and is fused onto said core by means of the fusible threads (11) and is solidified into the final preform (17) by means of resin injection.

2. Method according to Claim 1, **characterised in that** the fusible threads (11) are added in the region of high drapability of the fibre nonwoven fabric exhibiting the shape of a band.

3. Method according to Claim 1, **characterised in that** the required unidirectly [sic] oriented fibre portions (12) are applied and fused in the neutral bevel [sic] of the fibre nonwoven fabric exhibiting the shape of a band.

4. Method according to Claim 3, **characterised in that** the required unidirectly [sic] oriented fibre portions (12) are applied outside the regions of high drapability of the fibre nonwoven fabric exhibiting the shape of a band.

5. Method according to Claim 1, **characterised in that** subsequent to the decontouring [sic] of the fibre nonwoven fabric exhibiting the shape of a band, it is provided with slits (13) for integrating force transmission elements into the preform.

6. Method according to Claim 1, **characterised in that** upon mechanical fusing, the fusible threads (11) of the fibre nonwoven fabric exhibiting the shape of a band are heated by means of a fusing roll (15).

7. Method according to Claims 1 to 6, **characterised in that** a sewing unit generating two-thread lock stitches is used to produce the seams fixing the fabric architecture of the band (10).

## Revendications

1. Procédé de réalisation d'éléments structurels en matières plastiques renforcées par des fibres, tels que des éléments de commande de pâles de rotor, notamment des pâles de rotor d'un hélicoptère, dans lequel les fibres sont appliquées sous forme de couches de tissu sur une âme et sont consolidées par injection de résine pour former un élément structurel, lequel procédé comprend les étapes consistant à :
- transformer les fibres par dépose/surmoulage/drapage en un tissu de fibres correspondant aux contours de l'élément structurel respectif à fabriquer, ayant la forme d'un ruban (10),
- appliquer les parties nécessaires de fibres orientées de façon unidirectionnelle (12) de façon à être positionnées exactement sur le ruban (10), dans le sens circonférentiel de l'élément structurel respectif à fabriquer,
- fixer les fibres du tissu de fibres produit de la sorte dans leur position au moyen de coutures prédéfinies et le transformer ainsi en un produit semi-fini textile superposable, et
- former le ruban dans son contour (10) final en fonction des dimensions de l'élément structurel à fabriquer,
**caractérisé en ce que** des fibres fondues (11) sont ajoutées au ruban (10) et ensuite, le ruban (10) est enroulé sur une âme (14) d'un outil d'injection (18) et fixé sur celle-ci au moyen des fibres fondues (11) et consolidé par injection de résine pour former la pré-ébauche définitive (17).

2. Procédé selon la revendication 1, **caractérisé en ce que** les fibres fondues sont ajoutées dans la zone présentant une grande aptitude au drapage du tissu de fibres ayant la forme d'un ruban.

3. Procédé selon la revendication 1, **caractérisé en ce que** des parties nécessaires de fibres orientées de façon unidirectionnelle (12) sont appliquées dans la fibre neutre du tissu de fibres ayant la forme d'un ruban et sont fixées.

4. Procédé selon la revendication 3, **caractérisé en ce que** les parties nécessaires de fibres orientées de façon unidirectionnelle (12) sont appliquées à l'extérieur des zones présentant une grande aptitude au drapage du tissu de fibres ayant la forme d'un ruban.

5. Procédé selon la revendication 1, **caractérisé en ce que** le tissu de fibres ayant la forme d'un ruban, après la formation de son contour final, est doté d'encoches (13) destinées à encastrer des éléments d'application de force dans la pré-ébauche.

6. Procédé selon la revendication 1, **caractérisé en ce que**, lors de la fixation mécanisée, les fibres fondues (11) du tissu de fibres ayant la forme d'un ruban du ruban sont échauffées au moyen d'un rouleau de fixage (15).

7. Procédé selon l'une quelconque des revendications 1 à 6, **caractérisé en ce que**, pour fabriquer les coutures fixant l'architecture du tissu du ruban (10), on utilise une installation de couture produisant des points noués doubles.
